Europäisches Patentamt

European Patent Office

Office européen des brevets

(11) Veröffentlichungsnummer: **0 301 238**
**A1**

(12) **EUROPÄISCHE PATENTANMELDUNG**

(21) Anmeldenummer: 88109983.2

(22) Anmeldetag: 23.06.88

(51) Int. Cl.⁴: **G03B 27/58** , **G03C 3/00**

(30) Priorität: 25.07.87 DE 3724748

(43) Veröffentlichungstag der Anmeldung:
**01.02.89 Patentblatt 89/05**

(84) Benannte Vertragsstaaten:
**AT BE CH FR GB IT LI LU NL SE**

(71) Anmelder: **REHAU AG + Co**
**Rheniumhaus**
**D-8673 Rehau(DE)**

(72) Erfinder: **Der Erfinder hat auf seine Nennung**
**verzichtet**

(54) **Lichtdichter Behälter für fotoempfindliche Materialien.**

㊗ Die Erfindung betrifft einen lichtdichten Behälter für fotoempfindliche Materialien wie Filme, Fotopapiere, fotosensible Folien und dergleichen. Der Behälter besteht aus einem endseitig verschlossenen Kasten mit einer längsannähernd über die Kastenbreite verlaufenden Schlitzöffnung für den Filmauszug. In bzw. an dieser Schlitzöffnung sind Einrichtungen zur Verhinderung des Lichteintrittes in das Behälterinnere getroffen. Diese Einrichtungen bestehen darin, daß an den freien Enden der Behälterwandungen im Bereich der Schlitzöffnung jeweils wenigstens ein Abschnitt eines magnetischen und/oder ferromagnetischen Materials angeordnet ist. Dieses Material ist in seiner magnetischen Haltekraft derart eingestellt, daß unabhängig von der Länge der Schlitzöffnung in der Ruhelage wie beim Filmauszug ein lichtdichter Behälterverschluß erhalten bleibt.

Fig. 1

EP 0 301 238 A1

## LICHTDICHTER BEHÄLTER FÜR FOTOEMPFINDLICHE MATERIALIEN

Die Erfindung betrifft einen lichtdichten Behälter für fotoempfindliche Materialien wie Filme, Fotopapiere, fotosensible Folien und dergleichen, bestehend aus einem endseitig verschlossenen Kasten mit einer längs annähernd über die Kastenbreite verlaufenden Schlitzöffnung für den Filmauszug, wobei in bzw. an dieser Schlitzöffnung Einrichtungen zur Verhinderung des Lichteintritts in das Behälterinnere getroffen sind.

Für fotografische Vervielfältigungen, z.B. in Fotosatz- und Lichtsatzgeräten werden als lichtdichte Behälter zum Schutz des fotoempfindlichen Materials sogenannte Entwicklungsboxen eingesetzt. Diese Entwicklungsboxen weisen eine Schlitzöffnung auf, durch die das fotoempfindliche Material mit seiner lichtempfindlichen Schicht vom absolut dunklen Innenraum des Behälters nach außen zur Belichtungseinrichtung gezogen werden kann.

Bei den Behältern nach dem Stand der Technik wird versucht, die Lichtdichtheit durch besondere Vorkehrungen im Bereich der Schlitzöffnung wie Anordnung von Dichtlippen, Verwendung von Bürstenstreifen, Verwendung von Samtstreifen usw. zu erzielen. Dabei wird ein entsprechender Schließdruck über die Endkappen des Behälters auf die Schlitzöffnung aufgebracht. Man hat dabei festgestellt, daß bis zu einer gewissen Behälterlänge durch den über die Verschlußkappen aufgebrachten mechanischen Andruck im Bereich der Schlitzöffnung eine relative Lichtdichtheit im Inneren des Behälters erzeugt werden kann. Mit zunehmender Behälterbreite verringert sich jedoch der mechanische Anpressdruck und im Bereich der Schlitzöffnung treten vermehrt Undichtigkeiten auf.

Solche Undichtigkeiten sind aber auch bei kleineren Breiten der bekannten Behälter beobachtet worden, da der mechanische Anpressdruck über die Endkappen keinen gleichmäßigen Schließdruck über die gesamte Breite des Behälters erbringt.

Als Folge dieser Undichtigkeiten sind die fotoempfindlichen Materialien teilweise bereits innerhalb des Behälters belichtet und damit unbrauchbar geworden. Experimentell hat sich herausgestellt, daß diese Erscheinung mit zunehmender Breite der Behälter verstärkt auftritt. Eine Abhilfe dieses negativen Phänomens konnte auf mechanischem Weg beispielsweise über Verstärkung des Anpressdrucks im Bereich der Schlitzöffnung über die Endkappen des Behälters nicht erreicht werden, da der Anpressdruck in Abhängigkeit steht zu der Auszugskraft, mit welcher die fotoempfindlichen Materialien aus der Schlitzöffnung herausgezogen werden. Wird hier der mechanische Anpressdruck im Bereich der Schlitzöffnung zu groß, reißt aufgrund der erhöhten Reibungskräfte beim Auszug des fotoempfindlichen Materials aus dem Behälter dieses Material ab bzw. werden aufgrund der erhöhten Reibungskräfte negative Beeinflussungen der lichtempfindlichen Schicht in vermehrtem Maße auftreten.

Als nachteilig ist bei den Behältern nach dem Stand der Technik noch zu bemerken, daß aufgrund der mechanischen Aufbringung der Schließkräfte über die Endkappen diese vermehrt an der Schlitzöffnung im Bereich der Endkappen auftreten und zur Mitte der Schlitzöffnung immer schwächer werden. Bei gesteigerter Breite der Behälter haben Experimente gezeigt, daß die Schließkraft im Bereich der Schlitzöffnung zur Mitte hin gegen Null tendieren kann und bei weiter gesteigerter Breite der Behälter sogar ein negativer Effekt auftritt, der ein Aufgehen der Schlitzöffnung bewirkt. Das fotoempfindliche Material im Inneren des Behälters kann dadurch teilweise oder ganz zerstört werden.

Hier setzt die Erfindung ein, die es sich zur Aufgabe gestellt hat, einen lichtdichten Behälter für fotoempfindliche Materialien anzugeben, bei dem die geschilderten Nachteile nach dem Stand der Technik ausgeschlossen sind und mit dem sich insbesondere eine gleichmäßige Verteilung der Schließkraft im Bereich der Schlitzöffnung über deren gesamte Breite erzielen läßt. Erfindungsgemäß wird dazu vorgeschlagen, daß an den freien Enden der Behälterwandungen im Bereich der Schlitzöffnung jeweils wenigstens ein Abschnitt eines magnetischen und/oder ferromagnetischen Materials angeordnet ist, welcher in seiner magnetischen Haltekraft derart eingestellt ist, daß unabhängig von der Breite der Schlitzöffnung in der Ruhelage wie beim Filmauszug ein lichtdichter Behälterverschluß erhalten bleibt.

Die Erfindung ersetzt also die über die Endkappen auf die Schlitzöffnung mechanisch aufgebrachte Schließkraft an den freien Enden der Behälterwandungen durch magnetische Krafteinwirkung. Hierbei können die Magnete an dem freien Ende einer Behälterwandung angeordnet sein, während das andere Ende ein ferromagnetisches Material enthält. Im Schließzustand liegen beide freien Enden der Behälterwandungen aufgrund der magnetischen Haltekraft aneinander an und bewirken den lichtdichten Abschluß zum Behälterinneren.

Natürlich ist auch der Behälter der Erfindung in seinen Endbereichen mit Endkappen derart abgedeckt, daß die Verbindung der Endkappen zu dem Behälterquerschnitt in lichtdichter Weise erfolgt.

Wesentlich ist die Tatsache, daß aufgrund der magnetischen Haltekraft im Bereich der Schlitzöffnung unabhängig von deren Breite in der Ruhelage wie beim Filmauszug ein lichtdichter Behälterverschluß erhalten bleibt.

Auf diese Weise läßt sich durch die erfindungsgemäße Verwendung magnetischer Haltekraft eine allseits lichtdicht geschlossene Behälteranordnung erzielen, die auch bei der Bewegung des fotoempfindlichen Materials aus dem lichtdichten Behälter durch Aufbringung entsprechender Auszugskräfte erhalten bleibt.

Die Abzugskraft der fotoempfindlichen Materialien beim Auszug aus dem lichtdichten Behälter steht dabei in Funktion zur Haltekraft der magnetischen Abdichtung. Diese Haltekraft wird auch mit der Bezeichnung Linienkraft versehen, wobei es sich um solche Kräfte handelt, mit der die Magnete an den fotoempfindlichen Materialien anliegen. Bei gegebener Höchstauszugskraft der fotoempfindlichen Materialien $F_A$ läßt sich die zulässige Linienkraft L der Magnete wie folgt ermitteln:

$$L = L'b = \frac{F_A}{\mu}$$

Hierbei ist b = Breite der Schlitzöffnung
$\mu$ = Reibungskoeffizient.

Durch empirische Ermittlung wurde ein Reibungskoeffizient von 1,2 N ermittelt, der unabhängig von der Breite der Schlitzöffnung gleich bleibt. Bei einem lichtdichten Behälter von 12" Länge ergab dies eine Linienkraft von 3,5 N.

Voraussetzung hierfür ist, daß die magnetischen und/oder ferromagnetischen Materialien, welche beim Verschluß der Schlitzöffnung verwendet werden, mit einer ebenen Auflagefläche ausgestattet sind. Diese Auflagefläche soll so glatt wie möglich beschaffen sein, damit die Linienkraft des magnetischen Verschlusses entsprechend beeinflußt werden kann.

Eine derartige Beeinflussung kann durch die Eindringtiefe bei der Magnetisierung der Magneten erzielt werden, sie kann aber auch beispielsweise dadurch hervorgerufen sein, daß die magnetischen Abschnitte bei der Herstellung der Behälterwandungen im Bereich der Schlitzöffnung mit einer dünnen Lage aus polymerem Material überspritzt sind. Hierbei kann das polymere Material der Behälterwandung genauso verwendet werden wie beispielsweise ein weich eingestelltes oder anders angemischtes Deckmaterial im nach außen gerichteten Oberflächenbereich der magnetischen Abschnitte. Mit der gewählten Dicke dieser Überspritzungen, die beispielsweise im Zweimaterial-Extrusionsverfahren hergestellt sein können, kann die Linienkraft der Magnete entsprechend den Erforderlichkeiten eingestellt werden.

Neben derartigen Überspritzungen kann die nach außen gerichtete Oberfläche der magnetischen Abschnitte auch auf andere Weise oberflächenbehandelt sein. So ist hier ein Lackauftrag genauso denkbar wie beispielsweise eine Beschichtung mit Polytetrafluorethylen (Teflon). Hierzu wurde in einem Beispiel ein 2 mm dickes Magnetband, welches über die gesamte Dicke magnetisiert worden war, in den Abmessungen 8 x 4,5 mm hergestellt. Die Magnetisierung erfolgte zweipolig. Die Linienkraft der Magnete wurde mit 0,35 N gemessen. Die Auszugskraft des fotoempfindlichen Materials betrug unter den gegebenen Umständen 3,4 N, woraus ein Reibungskoeffizient von 0,96 N ermittelt wurde. Im Anschluß daran wurden die magnetischen Stücke mit Teflon besprüht. Nach dem Abtrocknen wurde hier im Experiment eine Auszugskraft der fotoempfindlichen Materialien von 2,45 N ermittelt. Dies entspricht einer Verbesserung des Reibungskoeffizienten auf 0,69 N.

Derartige Berechnungen lassen sich auf alle Breiten der erfindungsgemäßen lichtdichten Behälter anwenden.

Als magnetische Abschnitte lassen sich magnetisierte Bänder im Zusammenwirken mit ferromagnetischen Gegenlagern verwenden.

Es können jedoch auch magnetisierte Bänder auf beiden Seiten der Schlitzöffnung verwendet werden, wobei die Pole der Magnetisierung jeweils versetzt angeordnet sein müssen.

Vorteilhaft hat sich bei der Erfindung herausgestellt, daß der Behälter durch wenigstens einen als Filmscharnier dienenden Längswandbereich faltbar gemacht ist. Die Vorteile dieser Anordnung werden darin gesehen, daß die Behälterwandungen einstückig hergestellt werden können. Bei dieser Herstellung können beispielsweise die magnetischen Abschnitte an den freien Enden der Behälterwandungen im Bereich der Schlitzöffnung im Urformprozess mit eingebracht werden. Aufgrund des sich über einen Längswandbereich erstreckenden Filmscharniers kann dann der Behälter zu seiner Querschnittsform derart zusammengeklappt werden, daß die Magnete bzw. ferromagnetischen Materialien im Bereich der Schlitzöffnung aufeinander liegen und den Behälter in seiner gewünschten Form festhalten. Sodann können die Abdeckkappen lichtdicht auf die Behälterenden aufgebracht werden und die Beladung mit fotoempfindlichen Material kann erfolgen.

Es wurde bereits darauf hingewiesen, daß die magnetischen bzw. ferromagnetischen Abschnitte mit ebener Auflagefläche für die fotoempfindlichen Materialien ausgestattet sein sollen. Eine besondere Ausgestaltung ist hier möglich, indem die magnetischen oder ferromagnetischen Abschnitte an ihren Auflageflächen profiliert bzw. strukturiert sind. Auch auf diese Weise läßt sich die Linienkraft L der Magnete im Sinne einer Minimierung der Auszugskraft für die fotoempfindlichen Materialien beeinflussen.

Die magnetischen Abschnitte können wenigstens dreiseitig in die freien Enden der Behälterwandungen im Bereich der Schlitzöffnung eingelassen sein.

Dies kann - wie bereits angedeutet - im Wege des Urformprozesses durch dreiseitiges Umspritzen der magnetischen Abschnitte bei der Herstellung des Behälters erfolgen.

Die fotoempfindlichen Materialien wie Filme, Fotopapiere, fotosensible Folien und dergleichen sind auf einer Rolle aufgerollt, die im Behälterinneren gelagert ist. Aufgrund der Tatsache, daß bei der Arbeit mit diesen fotoempfindlichen Materialien der Durchmesser der Rolle laufend abnimmt, ergeben sich Verschiebungen im Anstellwinkel des fotoempfindlichen Materials in Richtung zur Schlitzöffnung des Behälters. Es können dabei bei abnehmenden Durchmesser zunehmende Abzugskräfte für das fotoempfindliche Material festgestellt werden, sofern die Schlitzöffnung starr unter 90° zur Rollenachse gehalten ist. Aus diesem Grunde kann es zweckmäßig sein, daß die freien Enden der Behälterwandungen mit den magnetischen Abschnitten schräg ins Innere des Behälters verlaufend angeordnet sind. Besonders vorteilhaft erscheint es dann, daß die freien Enden der Behälterwandungen zusätzlich flexibel gestaltet sind. Diese Flexibilität kann beispielsweise durch die Ausgestaltung wenigstens eines der freien Enden der Behälterwandungen als Faltenbalg erzielt werden. Auch kann eine Kombination zwischen flexiblen Wandbereichen und Faltenbalgelementen erfolgen. In einer besonderen Ausführungsform ist wenigstens einer der magnetischen Abschnitte an dem ihm zugeordneten freien Ende der Behälterwandungen beweglich gelagert.

Mit der Flexibilität bzw. der beweglichen Lagerung der magnetischen bzw. feromagnetischen Abschnitte im Bereich der Schlitzöffnung lassen sich die unterschiedlichen Winkelstellungen beim Abzug und damit vermehrtem Verbrauch der fotoempfindlichen Materialein gegenüber der Vorratsrolle und der Schlitzöffnung auffangen, ohne daß die Abzugskräfte negativ erhöht würden.

Der besondere Vorteil des erfindungsgemäßen Behälters für fotoempfindliche Materialien wird darin gesehen, daß mit der Verwendung der magnetischen Verschlußeinrichtungen im Bereich der Schlitzöffnung eine linear gleich verlaufende Kraftverteilung an der Schlitzöffnung erzielbar ist. Die negativen Merkmale bei einem Aufbau nach dem Stand der Technik, bei dem diese Kräfte an den Rändern des Behälters überhöht auftreten, jedoch zur Mitte immer schwächer werden, sind damit aufgehoben. Der Auszug der fotoempfindlichen Materialien aus der Schlitzöffnung kann damit mit dem erfindungsgemäßen Aufbau des Behälters mit vorher genau festlegbaren Kraftverteilungen unabhängig von der Breite des Behälters erfolgen.

In der Zeichnung sind Ausführungsbeispiele dieses erfindungsgemäßen Behälters schematisch dargestellt; es zeigt:

Fig. 1 einen Behälterquerschnitt mit linear verlaufenden magnetischen Abschnitten im Bereich der Schlitzöffnung.

Fig. 2 den Schnittbereich Z aus Fig. 1.

Fig. 3 verschiedene Gestaltungen der magnetischen Abschnitte mit Variationsmöglichkeiten der Auflageflächen.

Fig. 4 verschiedene Gestaltungen der freien Enden der Behälterwandungen.

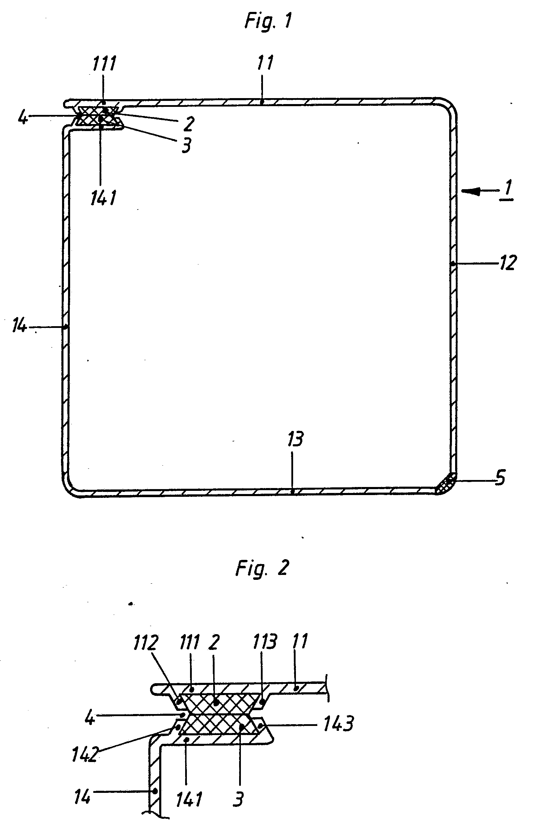

In Fig. 1 ist ein Querschnitt durch den Behälter 1 mit seinen Behälterwandungen 11, 12, 13, 14 gezeigt. An den freien Enden der Behälterwandungen 11, 14 sind Abschnitte 111, 141 angeformt, welche die magnetischen Materialien 2, 3 tragen. Das freie Ende 141 der Behälterwandung 14 ist dabei ins Behälterinnere abgewinkelt, so daß die beiden magnetischen Bereiche 2, 3 direkt aneinander anliegend gestaltet sind.

Die beiden magnetischen Bereiche 2, 3 bilden zwischen sich die Schlitzöffnung 4 für den Auszug des fotoempfindlichen Materials. Der Schlitzöffnung 4 gegenüberliegend ist im Verbindungsbereich der Behälterwandungen 12, 13 ein längsverlaufender, flexibler Streifen 5 eingebracht, über den die Behälterwandungen 12, 13 miteinander einstückig verbunden sind. Dieser flexible Streifen 5 wirkt als Filmscharnier und über diesen Streifen 5 können unter Aufhebung der Haltekraft der magnetischen Bereiche 2, 3 die Teilwandungen 11, 12 von den Teilwandungen 13, 14 des Behältes 1 abgeklappt werden.

Fig. 2 zeigt den Schnittbereich Z aus Fig. 1 in einer Vergrö-ßerung der Behälterwandungen 11, 14 im Bereich der Schlitzöffnung 4. Aus dieser Darstellung ist deutlich zu erkennen, daß die magnetischen Abschnitte 2, 3 wenigstens dreiseitig von Teilbereichen der Behälterwandungen 11, 14 übergriffen sind. Zu diesem Zweck erheben sich aus dem freien Ende 111 der Behälterwandung 11 konvergierend aufeinanderzu gerichtete Halteflächen 112, 113, welche eine schwalbenschwanzförmige Nut zur Aufnahme des magnetischen Abschnittes 2 bilden. Entsprechende Ausformungen 142, 143 sind auch am freien Ende 141 der Behälterwandung 14 zu erkennen, die ihrerseits den magnetischen Abschnitt 3 in ihrer schwalbenschwanzförmigen Nut aufnehmen. Die magnetischen Abschnitte 2, 3 sind in Form eines Trapezes gestaltet, welches in die durch die Ausformungen 112, 113, 142, 143 gebildeten schwalbenschwanzförmigen Nuten eingepaßt sind.

Die magnetischen Abschnitte 2, 3 können nach der Herstellung der Behälterwandungen 11, 12, 13, 14 in die durch die Abschnitte 112, 113, 142, 143 gebildeten schwalbenschwanzförmigen Nuten eingezogen werden. Sie können jedoch auch gleich im Urformprozess durch dreiseitige Umspritzung mit dem Wandungsmaterial des Behälters im Breich der Schlitzöffnung 4 befestigt werden.

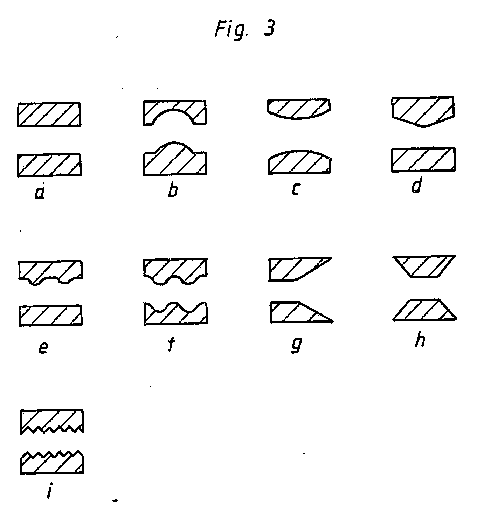

In Fig. 3 sind verschiedene Gestaltungen der magnetischen Abschnitte gezeigt. So zeigt Fig. 3A zwei rechteckige magnetische Abschnitte, die entweder aus zwei wechselseitig magnetisierten Magneten bestehen können oder von denen einer ein Magnetband ist, während der andere ein Band mit ferromagnetischen Eigenschaften, z.B. ein Stahlband ist. Neben den entsprechend magnetisierten Magnetbändern können für die Erfindung selbstverständlich auch Permanentmagnete eingesetzt werden. Ferner sind magnetische Abschnitte einsetzbar, die über die gesamte Breite der Schlitzöffnung längsverlaufend angeordnet sind. Im Längsverlauf der Breite der Schlitzöffnung können jedoch auch einzelne magnetische Abschnitte derart eigesetzt sein, daß jeweils ein magnetischer Abschnitt von einem nichtmagnetischen Abschnitt unterbrochen ist. Die Entfernung zwischen zwei magnetischen Abschnitten muß dabei so gehalten sein, daß die Linienkraft der enzelnen magnetischen Abschnitte den lichtdichten Verschluß im Bereich der Schlitzöffnung gewährleistet.

Fig. 3b zeigt magnetische Abschnitte, von denen der eine bereichsweise konkav und der andere entsprechend bereichsweise konvex ausgebildet sind.

Fig. 3c dagegen zeigt zwei magnetische Abschnitte, die gegenseitig gewölbt dargestellt sind. Auf diese Weise läßt sich eine nahezu linienförmige Haftkraft der Magnetzwischenabschnitte aufeinander erzielen.

Die gleiche Möglichkeit ergibt sich aus der Darstellung in Fig. 3D, wo der eine Magnetstreifen in seiner Anlagerichtung zum anderen Magnetstreifen einen stumpfen Winkel aufweist, während der andere Magnetstreifen in der Anlagefläche eben ausgestaltet ist. Auch hier erfolgt eine linienförmige Anlage der beiden magnetischen Abschnitte aneinander.

Die Darstellung in Fig. 3e ergibt durch die Doppelhöcker im oberen magnetischen Abschnitt eine doppelt linienförmige Anlage der beiden Magnetstreifen aneinander.

Fig. 3f entspricht dem in Fig. 3b gezeigten Aufbau, unterscheidet sich jedoch durch die verwendeten Doppelhöcker sowie die entsprechende doppelt konkave Ausgestaltung des unteren magnetischen Abschnittes.

Flg. 3g zeigt eine Verringerung der Anlagefläche der beiden magnetischen Abschnitte aufeinander durch teilweise planebene Gestaltung der Anlageflächen, von denen dann ein spitzer Winkel zu den jeweils unteren Enden der magnetischen Abschnitte verläuft. Eine entsprechende Beeinflussung der Größe der Anlagefläche ist in Fig. 3h gezeigt. Hier verlaufen von der unteren Abschlußfläche der Magnetbänder spitzwinkelige Abschnitte zur oberen Abschlußfläche und bilden somit trapezförmige magnetische Abschnitte.

In Fig. 3i ist eine strukturierte Oberfläche beider magnetischer Abschnitte im Bereich ihrer Anlageflächen zu sehen. Dadurch können punktförmige Anlagen der magnetischen Abschnitte an den fotoempfindlichen Materialien beim Durchzug durch die Schlitzöffnung erzielt werden.

Die Darstellung in Fig. 3a bis -i zeigen Möglichkeiten, wie durch Oberflächenvariationen der magnetischen Abschnitte die Linienkraft der Magnete und damit die Auszugskraft des fotoempfindlichen Materials beeinflußt werden können. Es handelt sich hierbei lediglich um Beispiele und es ist festzustellen, daß auch andere Gestaltungsweisen der aufeinanderzu gerichteten Oberflächenbereiche der magnetischen Abschnitte unter den beanspruchten Patentschutz fallen, sofern sie eine solche Beeinflussung der Linienkraft sowie funktional dazu der Auszugskraft für die fotoempfindlichen Materialien bewirken.

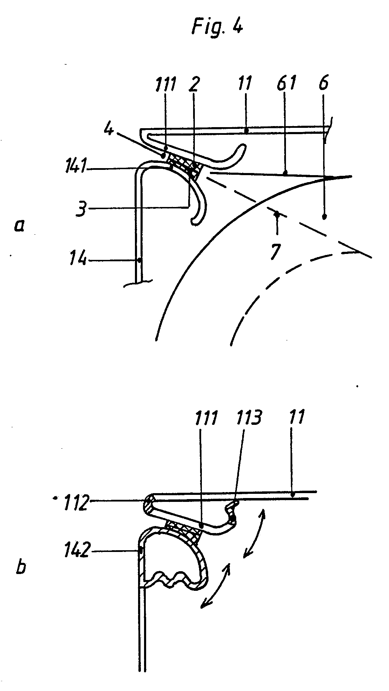

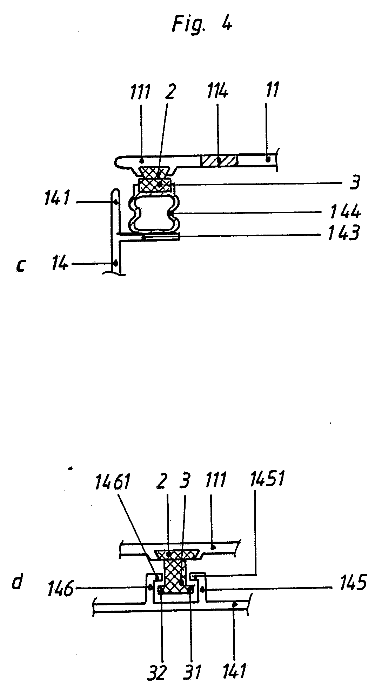

In Fig. 4 sind verschiedene Gestaltungen der freien Enden 111, 141 der Behälterwandungen 11, 14 dargestellt. So zeigt Fig. 4a die freien Enden 111, 141 der Behälterwandungen 11, 14 in winkeliger Stellung zum Inneren des Behälters 1. Die magnetischen Abschnitte 2, 3 sind zwischen den freien Enden 111, 141 wie beispielsweise zu Fig. 1 beschrieben, angeordnet und bilden zwischen sich die Schlitzöffnung 4. Im Inneren des Behälters 1 ist die Rolle 6 mit dem fotoempfindlichen Material angedeutet und das fotoempfindliche Material ist als Filmabschnitt 61 im Eingriff in die Schlitzöffnung 4 gezeigt. In der gestrichelten Linie 7 ist der Winkel angedeutet, den das fotoempfindliche Material bildet, wenn das Ende der Rolle 6 erreicht ist.

Um den Unterschied zwischen dem Anfangswinkel und dem Endwinkel und damit die negative Beeinflussung der Auszugskraft bei den verschiedenen Winkelstellungen aufzuheben, ist in Fig. 2b gezeigt, daß Teilbereiche der freien Enden 111, 141 der Behälterwandungen 11, 14 flexibel eingestellt werden können. In der gezeigten Darstellung ist das freie Ende 111 an der Umlenkstelle zur Behälterwandung 11 mit einem Filmscharnier 112 ausgestattet und zusätzlich mit einem weiteren Filmscharnier 113 an der Innenwand der Behälterwandung 11 angelenkt. Das freie Ende 141 dagegen ist vollständig als flexibler Faltenbalg 142 ausgestaltet.

Aufgrund dieser Anordnung können die flexibel eingestellten freien Enden 111, 141 jede Bewegung des fotoempfindlichen Materials beim Ablaufen der Rolle 6 im Inneren des Behälters mitmachen. Die Auszugskraft des fotoempfindlichen Materials bleibt also hier über die gesamte Rollendicke gleich.

Selbstverständlich kann auch nur eine der freien Enden 111, 141 flexibel ausgestaltet werden bzw. können die flexiblen Zonen an anderer Stelle angeordnet sein, als sie in Fig. 4b gezeigt sind.

Fig. 4c zeigt eine weitere Möglichkeit der flexiblen Gestaltung im Bereich der Schlitzöffnung 4. Das freie Ende 111 der Behälterwand 1 mit seinem magnetischen Abschnitt 2 ist hier gleich gestaltet wie zu Fig. 1 beschrieben. Im Unterschied dazu ist in die Behälterwand 11 ein Abschnitt 114 eines weich eingestellten Materials einstückig eingebracht. Dieser Abschnitt 114 bildet die flexible Zone der Behälterwand 11.

Am freien Ende 141 der Behälterwand 14 ist eine Auflagerfläche 143 angeformt, auf der sich ein flexibler Faltenbalg 144 erhebt. An der Spitze dieses flexiblen Faltenbalges ist der magnetische Bereich 3 angeordnet, der direkt gegenüber dem magnetischen Bereich 2 am freien Ende 111 der Behälterwand 11 verläuft. Mit dieser Anordnung können die unterschiedlichen Winkelstellungen beim Auszug des fotoempfindlichen Materials durch die Schlitzöffnung 4 durch Bewegungen des Faltenbalges 14 entsprechend nachvollzogen werden.

In Fig. 4d schließlich ist eine Ausgestaltung der freien Enden 111, 141 der Wandbereiche 11, 14 des Behälters 1 dargestellt, welche eine besondere Gestaltung beschreibt. Hier ist der magnetische Abschnitt 2 entsprechend der in Fig. 1 gezeigten Anordnung in das freie Ende 111 der Behälterwandung 11 eingelassen.

Am freien Ende 41 der Behälterwand 14 dagegen ist durch die Wandbereiche 145, 146 eine U-förmige Aufnahmekammer geschaffen, welche durch die Flansche 1451, 1461 eine spaltartige Öffnung nach außen besitzt. Der magnetische Abschnitt 3 ist in der so geschaffenen Aufnahmekammer verschieblich gelagert, wobei an dem magnetischen Abschnitt 3 im unteren Endbereich flanschartige Verbreiterungen 31, 32 angeformt sind. Diese flanschartigen Verbreiterungen 31, 32 hintergreifen die Flansche 1451, 1461 und werden dadurch in ihrer Bewegungsfähigkeit begrenzt.

Über die Beweglichkeit des magnetischen Abschnittes 3 in der so geschaffenen Aufnahmenut können die unterschiedlichen Anstellwinkel des fotoempfindlichen Materials beim Ablauf der Rolle 6 innerhalb des Behälters 1 ebenfalls nachvollzogen werden.

## Ansprüche

1. Lichtdichter Behälter für fotoempfindliche Materialien wie Filme, Fotopapiere, fotosensible Folien und dergleichen, bestehend aus einem endseitig verschlossenen Kasten mit einer längs annähernd über die Kastenbreite verlaufenden Schlitzöffnung für den Filmauszug, wobei in bzw. an dieser Schlitzöffnung Einrichtungen zur Verhinderung des Lichteintritts in das Behälterinnere getroffen sind, dadurch gekennzeichnet, daß an den freien Enden (111, 141) der Behälterwandungen (11, 14) im Bereich der Schlitzöffnung (4) jeweils wenigstens ein Abschnitt (2, 3) eines magnetischen und/oder ferromagnetischen Materials angeordnet ist, welcher in seiner magnetischen Haltekraft derart eingestellt ist, daß unabhängig von der Länge der Schlitzöffnung (4) in der Ruhelage wie beim Filmauszug ein lichtdichter Behälterverschluß erhalten bleibt.

2. Behälter nach Anspruch 1, dadurch gekennzeichnet, daß der Behälter (1) durch wenigstens einen als Filmscharnier dienenden Längswandbereich (5) faltbar gemacht ist.

3. Behälter nach Anspruch 1, dadurch gekennzeichnet, daß die magnetischen Abschnitte (2, 3) mit ebener Auflagefläche ausgestattet sind.

4. Behälter nach Anspruch 1, dadurch gekennzeichnet, daß die magnetischen Abschnitte (2, 3) an ihren Auflageflächen profiliert bzw. strukturiert sind.

5. Behälter nach Ansprüchen 1, 3 und 4, dadurch gekennzeichnet, daß die magnetischen Abschnitte (2, 3) wenigstens dreiseitig in die freien Enden (111, 141) der Behälterwandungen (11, 14) eingelassen sind.

6. Behälter nach Anspruch 5, dadurch gekennzeichnet, daß die magnetischen Abschnitte (2, 3) bei der Herstellung der Behälterwandungen (11, 12, 13, 14) mit einer dünnen Lage eines polymeren Materials überspritzt sind.

7. Behälter nach Anspruch 5, dadurch gekennzeichnet, daß die magnetischen Abschnitte (2, 3) oberflächenbehandelt sind.

8. Behälter nach einem oder mehreren der vorangegangenen Ansprüche, dadurch gekennzeichnet, daß die freien Enden (111, 141) der Behälterwandungen (11, 14) mit den magnetischen Abschnitten (2, 3) schräg ins Innere des Behälters (1) verlaufend angeordnet sind.

9. Behälter nach Anspruch 8, dadurch gekennzeichnet, daß die freien Enden (111, 141) der Behälterwandungen (11, 14) zusätzlich flexibel gestaltet sind.

10. Behälter nach Ansprüchen 8 und 9, dadurch gekennzeichnet, daß die Flexibilität durch die Ausgestaltung wenigstens eines der freien Enden (111, 141) der Behälterwandungen (11, 14) als Faltenbalg (142, 144) erzielbar ist.

11. Behälter nach Ansprüchen 9 und 10, gekennzeichnet durch die Kombination zwischen flexiblen Bandbereichen (112, 113, 114) und Faltenbalgelementen (142, 144).

12. Behälter nach Ansprüchen 9, 10 und 11, dadurch gekennzeichnet, daß wenigstens einer der magnetischen Abschnitte (2, 3) an dem ihm zugeordneten freien Ende (111, 141) der Behälterwandungen (11, 14) beweglich gelagert ist.

*Fig. 1*

111    11

4    2
    3

141

1

12

14

13

5

*Fig. 2*

112  111  2  113  11

4    143

142

14    141    3

Fig. 3

a  b  c  d

e  f  g  h

i

Fig. 4

## Fig. 4

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | EP-A-0 196 577 (FUJI PHOTO FILM)<br>* Seite 6, Zeilen 5-14; Figuren 1,4 *<br>--- | 1,2 | G 03 B 27/58<br>G 03 C 3/00 |
| A | US-A-4 420 120 (G.E. RAYMOND)<br>* Spalte 2, Zeilen 30-50; Ansprüche 1-3; Figuren 1,3,4 *<br>--- | 1,2 | |
| A | US-A-3 971 470 (V.C. WHITE)<br>* Spalte 3, Zeilen 24-42; Ansprüche 1,7-12,16,17; Figuren 1,4 *<br>--- | 1-3,5 | |
| A | RESEARCH DISCLOSURE, Band 141, Januar 1976, Seite 20, Ref. Nr. 14131, Havant GB; D.T. FELDHAUS et al.: "Dispensing cassette for photosensitive web"<br>* Letzter 2 Absätze; Figuren 3,4 *<br>--- | 6,7 | |
| A | FR-A-2 309 898 (AGFA GEVAERT)<br>* Seite 3, Zeile 28 - Seite 4, Zeile 26; Figuren 1-3,6 *<br>----- | 1,8 | RECHERCHIERTE SACHGEBIETE (Int. Cl.4)<br><br>G 03 B 27/58<br>G 03 C 3/00<br>B 65 D 81/30 |

Der vorliegende Recherchenbericht wurde für alle Patentansprüche erstellt

| Recherchenort | Abschlußdatum der Recherche | Prüfer |
|---|---|---|
| DEN HAAG | 04-11-1988 | HERYET C.D. |